(19)

Europäisches
Patentamt
European
Patent Office
Office européen
des brevets

(11) **EP 1 754 967 A2**

(12) **EUROPEAN PATENT APPLICATION**

(43) Date of publication:
    **21.02.2007 Bulletin 2007/08**

(51) Int Cl.:
    **G01N 21/35** (2006.01)

(21) Application number: **06112250.3**

(22) Date of filing: **05.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **05.04.2005 CN 200520063070**<br><br>(71) Applicant: **National Institute for the Control of Pharmaceutical and Biological Products**<br>**10050 Beijing (CN)** | (72) Inventors:<br>• **Hu, Changqin**<br>  **Beijing 100050 (CN)**<br>• **Feng, Yanchun**<br>  **Beijing 100050 (CN)**<br>• **Yin, Lihui**<br>  **Beijing 100050 (CN)**<br><br>(74) Representative: **Jones, Helen M.M.**<br>**Gill Jennings & Every LLP**<br>**Broadgate House**<br>**7 Eldon Street**<br>**London EC2M 7LH (GB)** |

(54) **A method and instrument for identifying a drug by near infrared spectroanalysis**

(57)    The present invention relates to a method and an instrument for identifying a drug by Near Infrared (NIR) spectroanalysis. More specifically, the present invention relates to a method and an instrument for nondestructively identifying a drug by Near Infrared spectroanalysis technique in combination with stoichiometry, so as to confirm that the drug is in agreement with its labeled name.

EP 1 754 967 A2

**Description**

**Technical Field**

The present invention relates to a method and an instrument for identifying a drug by Near Infrared (NIR) spectroanalysis. More specifically, the present invention relates to a method and an instrument for nondestructively identifying a drug by Near Infrared spectroanalysis technique in combination with stoichiometry, so as to confirm that the drug is in agreement with its labeled name.

**Background**

Counterfeit or substandard drugs have become a widespread problem. Counterfeit drug usually occurs as a non-drug labeled as a drug, or a low-valued drug labeled as a high-valued drug; substandard drug occurs as a drug whose parameters wholly or partly, such as the content of the active ingredient in the drug, cannot meet requirements for drug quality.
It is commonly recommended in existing pharmacopoeias that thin-layer chromatography (TLC), liquid or gas chromatography, infrared or mass spectrometry, color reaction etc. be used to identify drugs. These methods, in spite of their wide recognition as statutory ones, are time-consuming. For example, the methods which underlie the instant drug -assay kit recommended by World Health Organization (WHO) comprise thin-layer chromatography (TLC), color reaction etc., but produce only poor assay results and thus fail to find wide application. Besides these disadvantages, some of these methods involve a destructive treatment of the drugs to be assayed.

So far, drug administration departments and manufacturers in many countries are devoted to prohibiting counterfeit and substandard drugs; most of their work, however, is just focused on identifying packaging of these drugs.

Over the recent decades, NIR spectroanalysis technique, stoichiometry, computer software technology and their combination have undergone great progress, and contributed to wider uses of NIR spectroanalysis technique in analyzing and detecting drug quality. NIR spectroanalysis technique has attracted more and more attention for its advantages, for example, fast testing, simple operation, non-destructive treatment of assay samples, etc. Some drug manufacturers have also used this technique for drug quality inspection.

In the prior NIR spectroanalysis technique for identifying drugs, identification models are typically established in view of certain factors, for example drug granularity, adjuvant, productionprocess, temperature, humidity, etc. The identification models thus established, however, can only be used for detecting drugs from a single source. Thus, NIR spectroanalysis technique is used by drug manufacturers mainly for online quality inspection of a particular drug.

**Summary of the Invention**

In their research, the inventors found that when a single qualitative identifying model of NIR spectroanalysis is used, a sample drug may be mistakenly identified as identical to one of the samples employed in establishing the model, in spite of a significant difference between their NIR spectra.

In order to solve thisproblem, the inventors foundthat, by employing two qualitative identifying models of NIR spectroanalysis, an identifying model I of NIR spectroanalysis (hereinafter referred to as " identifying model I") and an identifying model II of NIR spectroanalysis (hereinafter referred to as " identifying model II "), it is possible to accurately identifying a drug to determine whether it is in agreement with its labeled name, thus making it possible to accurately, rapidly and non-destructively identify a counterfeit or substandard drug.

Therefore, the present invention provides a method for identifying a drug by NIR spectroanalysis; more specifically, the present invention provides a method for identifying a drug to determine whether a sample drug is in agreement with its labeled name, i.e. a method for determining whether a sample drug contains its labeled active compound, which comprises the following steps:

    a. collecting modeling samples;
    b. establishing and adjusting identifying model I based on said modeling samples;
    c. establishing and adjusting identifying model II based on said modeling samples;
    d. identifying a sample to be identified by applying identifying models I and II respectively; and
    e. comparing the identification results of said two identifying models to determine said sample to be identified.

If the identification results of said two models are identical with each other, and are in agreement with the labeled name of said sample to be identified, it is determined that said sample to be identified is the drug as labeled.

If the identification results of said two models are different from each other, it is determined that said sample to be identified is a counterfeit drug, and is not the drug as labeled.

**Brief Description of Figures**

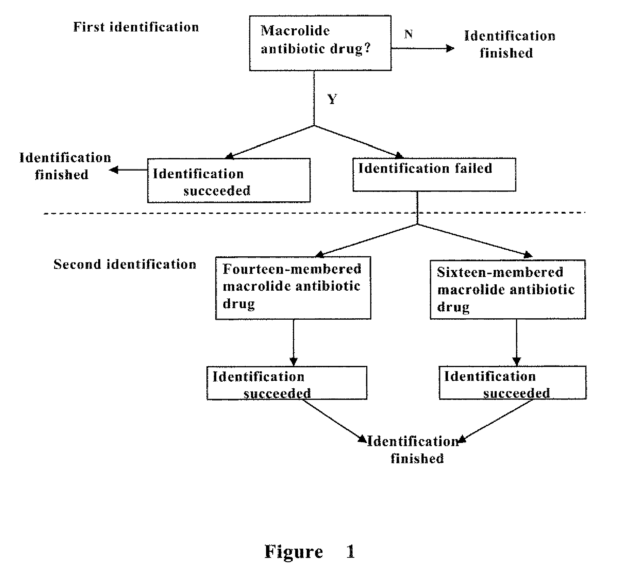

Figure 1 is an identifying model I established according to the embodiment of the present invention which shows the identification order of the identifying model I for the modeling samples.

**Detailed Description of the Invention**

As used herein, the term "modeling samples" refers to drugs collected for the purpose of establishing a identifying model; they are commercially available drugs in accordance with the Chinese Pharmacopoeia which comprise at least

1. a drug containing an active compound having the same chemical structure as that of the active compound labeled as being contained in the sample to be identified; and
2. a drug containing an active compound having a chemical structure different from that of the active compound labeled as being contained in the sample to be identified.

As used herein, the term "sample to be identified" refers to a drug which is to be identified by the method of the present invention so as to determine whether it is in agreement with its labeled name, i.e. whether it is a drug as labeled on its package or on its surface or at any appropriate position of the drug.

Preferably, said modeling samples are drugs containing an active compound having a chemical structure identical or similar to that of the active compound as labeled of the sample to be identified. For example, Cefalexin and Cefadroxil are deemed to be the compounds having similar chemical structures in the present invention.

Preferably, for the purpose of the present invention, the modeling samples and the sample to be identified have the same dosage form of drugs and the same packaging forms. As used herein, the phraseology "packaging form" refers to the external packaging of drugs. For example, if the sample to be identified is packaged with aluminum plastic, said modeling samples are also be packaged with aluminum-plastic so as to have the same packaging form.

Preferably, the packaging form in the present invention is aluminum-plastic.

Preferably, the present method are suitable for identifying and determining drugs having dosage forms of tablets, capsules, injectable powders, injections, ointments, suspensions, sugar-coated tablets, or compound formulations with constant compositions, and more preferably, of tablets, injectable powders, and capsules.

In the case where either the modeling samples or the sample to be identified has the dosage form of sugar-coated tablet, it is necessary to remove the sugar coating before collecting NIR spectra data.

The active compound in the modeling samples of the present invention or the sample to be identified should be present within the concentration range which is detectable for NIR spectroanalysis.

Identifying model I of the present invention should be capable of differentiating and identifying various types of modeling samples. And if necessary, identifying model I achieves differentiation and identification of various types of modeling samples through multi-level identification for the purpose of the invention, the expression "multi-level identification" refers to a process in which, if the identifying model established in certain NIR spectral band can be used to achieve differentiation and identification of only part of, rather than all of, the types of modeling samples, another identifying model can be established in another NIR spectral band so as to differentiate and identify the part types of samples which cannot be differentiated or identified by the previous model. Such process can be repeated for several times until all the types of samples are differentiated and identified from each other. In the case where the multi-level identification is used, identifying model I of the present invention comprises various models established for the multi-level identification described above.

Identifying model I of the present invention can achieve an accuracy of 100% in differentiating and identifying the types of modeling samples. And it can achieve an accuracy of no less than 90%, preferably no less than 95%, in differentiating and identifying a sample type to be identified.

Identifying model I of the present invention can be established and adjusted by all methods for establishing and adjusting qualitative NIR models in the prior NIR spectroanalysis.

Preferably, identifying model I of the present invention is established as follows:

Firstly, reducing the dimensionality of the NIR-spectra data of the modeling samples by Principal Component Analysis method (hereinafter referredto as PCA) ; and then, establishing identifying model I of the present invention by various data-processing modes of NIR spectroanalysis software with calculating principle being Pattern Recognition method, preferably PCA Discriminant Analysis method.

Principal Component Analysis method of the present invention refers to the one, in which original variables are transformed into a smaller amount of new variables, which are a linear combination of the original variables, wherein the new variables should be able to characterize the date features of the original variables to the fullest possible extent, and do not lead to the loss of information.

Pattern Recognition method of the present invention is a multivariable analysis method, which is used for classifying and identifying samples. It is a comprehensive technique which reveals interior disciplines and underlying properties of materials with the aid of mathematical means and computer technologies. Pattern Recognition method can be used to process and analyze various forms of information characterizing materials or phenomena (digital, literal, and logical). It is a process in whichmaterials or phenomena are described, recognized, classified and explained. Therefore, Pattern Recognition method is an important component in information science and human intelligence.

PCA Discriminant Analysis method of the present invention belongs to Pattern Recognition method, in which PCA method is used for reducing data dimensionality, and then classifying and identifying samples.

Identifying model I of the present invention, based on the distance between the NIR spectrum of the sample to be identified and the average NIR spectra of the modeling samples, performs Cluster Analysis, and accordingly, determine the threshold values of the modeling samples.

Preferably, Euclidian Distance is used as a classification basis to make Cluster Analysis in the present invention.

Cluster Analysis of the present invention is a multivariable analysis method, in which spectra are classified according to their relevance or similarity so that similar ones are fallen into one class and significantly different ones are separated out.

The NIR spectroanalysis software in the present invention comprises qualitative analysis software, an appendix to the near infrared spectrometers made by BRUKER Company, German.

Preferably, identifying model I of the present invention is established through the following steps:

Collecting and extracting the spectrum information of the active compound in the modeling sample from the NIR spectrum of each sample; and then, according to these information, establishing identifying model I to differentiate and identify the modeling sample.

When identifying models I of the present invention is established, said modeling samples comprise preferably three or more, more preferably five or more types of drugs; and each type of drugs preferably comprises products collected from three or more manufacturers.

Identifying model II of the present invention is established through the following steps:

a. collecting NIR-spectra data:

measuring and collecting the NIR-spectra information of each modeling sample individually by NIR spectrometers;

b. establishing and adjusting identifying model II:

establishing several preliminary models of the NIR spectroanalysis for each type of the modeling samples by various data-processing modes of prior qualitative NIR spectral analysis software;
choosing one of these preliminary models which has the strongest ability to identify each type of modeling samples as the preliminary model of identifying model II for the corresponding modeling sample; and
establishing and adjusting the preliminary model of identifying model II by the methods for establishing and adjusting qualitative NIR identifying models in the prior NIR spectroanalysis, so as to obtain said identifying model II for each type of modeling samples.

Pattern Recognition method for establishing identifying model II of the present invention is preferably PCA Discriminant Analysis method as described above.

During the process of establishing identifying model II, the strongest ability to identify each type of the modeling sample according to the present invention refers to, for every two types (e.g. type A and type B) of the modeling samples, the maximized quotient of the difference between the distance between the average NIR spectra thereof and the sum of the threshold values thereof to the sum of the standard deviations, i.e. SDevs, of the distances from the NIR spectra to the average NIR spectra thereof, said standard deviation being calculated by the software:

$$\frac{D_{AB} - (DT_A + DT_B)}{SDev_A + SDev_B}$$

Wherein,

$D_{AB}$: distance between the average NIR spectra of samples A and B;

$DT_A+DT_B$: sum of the threshold values of samples A and B; and

$SDev_A$ (or $SDev_B$): standard deviation of the distances from the NIR spectra of sample A (or B) calculated by the software to the average NIR spectra of sample A (or B).

Euclidian Distance is used as a classification basis to make Cluster Analysis for identifying model II.

According to the present invention, for two types of the modeling samples, the distance between the average NIR spectra thereof refers to Euclidian Distance between the average NIR spectra thereof.

The threshold value according to the present invention refers to the sum of the largest distance from the actual NIR spectrum of modeling sample to the average NIR spectrum of the corresponding identifying model and, as the correction term, certain times of the standard deviation.

Preferably, for one type of modeling sample, identifying model II should be established on an NIR spectral band different from that used in establishing identifying model I, for example, wider than that used in establishing identifying model I.

The average NIR-spectra distance ($D_M$) and the standard deviation (SDev) of identifying model II according to the present invention are calculated as follows:

The average NIR-spectra distance ($D_M$) according to the present invention refers to the average value of the distance from the NIR spectra of each modeling sample of one drug type to the average NIR spectrum thereof, which is calculated as follows:

$$D_M = \frac{\sum Di}{n}$$

wherein

n is the number of NIR spectra of the modeling samples,

i represents the No. i NIR spectrum of the drug type, and i is 1, 2, 3, ... n, and

D represents Euclidian Distance.

The Euclidian Distance ($D_{AB}$) between NIR spectra (D) of modeling samples of different types (e.g. type A and type B) is calculated as follows:

$$D_{AB} = \sqrt{\sum_k (a_k - b_k)^2}$$

wherein

the vector $a_k$ represents the ordinate of the average NIR spectrum of drug type A,

the vector $b_k$ represents the ordinate of NIR spectrum of drug type B,

k represents the No. k data point,

and the sum calculation is carried out for all chosen data points.

SDev represents the standard deviation of the distance from the NIR spectrum of a type of modeling sample (e.g. type A) to the average NIR spectrum, which is calculated as follows:

$$SDev = \sqrt{\frac{\sum_i Di^2}{n-1}}$$

wherein

i represents the No. i NIR spectrum of the modeling samples,

n represents the number of the original NIR spectra of the modeling samples;
i is 1, 2, 3, ... n,
Di represents Euclidian Distance from the No.i NIR spectrum of the modeling sample A to the average NIR spectrum.

During the process of establishing identifying model II, the modeling samples comprise at least the drug type corresponding to the label of the drug to be identified. Preferably, the modeling samples comprise the drug type corresponding to the label of the drug to be identified and its adjuvant, such as starch.

During the process for establishing qualitative NIR-spectra models, the threshold value should be calculated, the method in the prior art being as follows:

$$DT = Maximum\ Hit + 0.25\ SDev$$

wherein

DT is the threshold value;
Hit is the distance from the original NIR spectrum to the average NIR spectrum; and
Maximum Hit represents the largest distance from the original NIR spectrum to the average NIR spectrum.

When identifying model II of the present invention is to be established, the modeling samples comprise at least the labeled type of the sample to be identified and preferably the same adjuvant, such as starch.

When the number of modeling samples of a drug type is small, the threshold values of identifying models I and II according to the present invention can be adjusted as follows if necessary:

Step a:

for the types of the modeling samples which can be differentiated and identified from each other without confusion, the threshold values thereof are adjusted as follows:

$$DT_A = Mean\ hitA + 3SD\ (99\ \%\ of\ the\ confidence\ limit);$$

wherein

A represents any type of the modeling samples which can be differentiated and identified from each other,
$DT_A$ is the threshold value of type A,
Mean hitA is the average value of the distances from the NIR spectra of each sample of type A to the average NIR spectrum of that type.

SD represents the standard deviation of the difference between the distance from the NIR spectrum of any one modeling sample to the average NIR spectrum and the average value of the distances from all the NIR spectra of the modeling samples of said type to the average NIR spectrum, which is calculated as follows:

$$SD = \sqrt{\frac{\sum_{i}(Xi - Xm)^2}{n-1}}$$

wherein

i represents the No. i original NIR spectrum,
n represents the number of the original NI spectra;
i is 1, 2, 3, ... n, Xi represents Euclidian Distance from the No. i original NIR spectrum to the average NIR spectrum, and
Xm represents the average value of Euclidian Distances from all the NIR spectra of the samples of said type to the average NIR spectrum.

Step b:

for the type (e.g. type A) of the modeling samples which can be differentiated and identified from each other, if a confusion with other types may be caused by the above method, the threshold value of type A is adjusted as follows, while the threshold values of other types remain unchanged:

$$DT_A = Mean\ hitA + 2SD\ (95\ \%\ of\ the\ confidence\ limit);$$

wherein, the symbols are defined as that in step a;

Step c:

for the type of the modeling samples which can be differentiated and identified from each other, if a confusion with other types may be caused by the method described in Step b, the threshold value of the type, e.g. type A is adjusted as follows, while the threshold values of other types remain unchanged:

$$DT_A = Mean\ hitA + 1.65SD\ (90\ \%\ of\ the\ confidence\ limit);$$

wherein, the symbols are defined as that in step a;

Step d:

if a confusion with other types may still be caused by the method described in Step c, the threshold value of type A is no longer adjusted, and is put into the next level of the identifying model for continuing identification.

In the case, however, where the number of modeling samples are too small to be sufficiently representative, the above method may lead to a low threshold value, and thus, to a low identification rate for the sample to be identified. In order to solve the above problem caused by the insufficiently representative modeling samples, the threshold values of identifying models I and II are adjusted according to the present invention as follows:

Step e:

if the number of the modeling samples of a certain type is too small to be sufficiently representative for establishing the model, the threshold value thereof is set to be the same as that of another type having similar structure.

It is to be noted that the identifying models I and II used according to the present invention can be used in any order without limitation. In other words, identifying model I can be used prior to, or posterior to, identifying model II in identifying the drugs to be identified.

Any NIR spectrometers, for example, MATRIX-F of BRUKER, German can be used to collect NIR-spectra data and to establish corresponding models of the present invention together with the appendix thereof, such as the NIR analysis software.

It is still another object of the present invention to provide an instrument, e.g. NIR spectrometer, for detecting and identifying drugs. Besides the currently available functions, this NIR spectrometer is equipped with identifying models I and II of the present invention for determining active compounds in drugs.

It is yet another object of the present invention to provide a vehicle for detecting and identifying active compounds in drugs. Said vehicle is equipped with the instrument, e.g. NIR spectrometer, of the present invention for detecting and identifying drugs.

According to the technical contents disclosed in the present invention, it is easy for those skilled in the art to understand other embodiments of the present invention. Thus, the following examples are merely intended to illustrate the present invention, but not to limit the scope thereof. Various modification and improvement can be made without departing from the spirit of the present invention. Accordingly, all these modification and improvement fall into the scope of the present invention.

Example: Identification of the tablet of macrolide antibiotic drug with aluminum plastic packaging

1. Collecting modeling samples

In order to establish identifying models I and II for the tablet of macrolide antibiotic drug with aluminum plastic packaging, the collected modeling samples were shown in the following Table 1:

Table 1: The Modeling Samples for the Tablet of Macrolide Antibiotic Drug with Aluminum Plastic Packaging

| Type | The Number of Manufacturers |
|---|---|
| Azithromycin | 5 |
| Erythromycin | 7 |
| Acetylspiramycin | 2 |
| Acetylkitsamycin | 1 |
| Erythromycin Ethylsuccinate | 25 |
| Midecamycin | 1 |
| Meleumycin | 2 |
| Roxithromycin | 11 |
| Clarithromycin | 7 |
| Kitasamycin | 4 |

2. Establishing identifying model I

The NIR-spectra data were collected by the NIR spectrometer, MATRIX-F of BRUKER, German, and were calculated by the qualitative analysis software, an appendix of said spectrometer.

a. Collecting the NIR-spectra data of the modeling samples

The NIR spectrometer, MATRIX-F of BRUKER, German, and the InGaAs detector were used.
Measuring conditions : the diffuse reflection scanning method using solid optical fiber probe; resolution: 8 cm$^{-1}$; backgrounds scanned for 64 times; the sample scanned for 64 times; scanning range: 12000-4000 cm$^{-1}$; 6 tablets scanned per batch of modeling sample respectively.

b. Establishing and adjusting identifying model I

The spectral bands of 4500-6800 cm$^{-1}$ and 7300-10000 cm$^{-1}$ were selected for establishing identifying model I of the tablet of macrolide antibiotic drug with aluminum plastic. And then, six methods for pre-processing the spectra, which are provided by the software, i.e. an appendix of the NIR spectrometer of BRUKER, were used to establish various qualitative NIR identifying models on these bands, while other modeling conditions being unchanged except the pre-processing methods. The identifying model, which has the least possibility to cause confusion between different modeling samples, was determined to be the preliminary model of identifying model I. And said preliminary model was adjusted by prior art methods, so as to ensure that an accuracy of 100% can be achieved for differentiating and identifying the modeling samples of macrolide antibiotic drug with aluminum plastic on the whole.
Identifying model I established thereby was divided into two levels, its identification order for the modeling samples being shown in Figure 1.

3. Establishing identifying model II

a. Establishing the preliminary model of identifying model II

Based on PCA principle in combination with OPUS software which is developed and provided for the NIR spectrometer of BRUKER, three schemes were considered for establishing the preliminary model of identifying model II on the spectral band of 4200-6000 cm$^{-1}$:

Scheme 1: Principal Component Analysis was carried out on the NIR spectra of all the samples for each type of the modeling samples and on the NIR spectrum of the active compound in this type of drug. Two principal components were obtained by the above OPUS software, wherein the first component represented the principal information of the active compound in this type of drug, and the second component consisted of the information of the adjuvant and measuring errors. The first component was selected for the qualitative analysis.

Scheme 2: PCA was carried out on the NIR spectra of all the samples for this type of the modeling samples and on the NIR spectra of all the other drugs collected for non-modeling samples, wherein said other drugs were deemed to be the adjuvant. Two principal components were obtained by the above OPUS software, wherein the first component represented the principal information of the adjuvant in this type of drug, and the second component consisted of the information of the active compound and measuring errors. The second component was selected for the qualitative analysis.

Scheme 3: PCA was carried out on the NIR spectra of all the samples for each type of the modeling samples, on the NIR spectrum of the active compound in this type of drug, and on the NIR spectra of the adjuvants of the modeling samples. Three principal components were obtained by the above OPUS software, wherein the first two components encompassed a great amount of the information of the active compound in this type of drug and the adjuvant thereof, and the third component represented measuring errors. The first two components were selected for the qualitative analysis.

These three schemes were evaluated for Roxithromycin tablet with aluminum plastic packaging as an example. All the three models of these schemes were established on the primary characteristic spectral band (4200-6000 cm$^{-1}$) of this type, and are preprocessed by the method comprising of first derivative (five points smoothing) and the vector normalization. The parameters, comprising the standard deviations (SDev) of the distances from the actual NIR spectra to the average NIR spectra, the average NIR-spectra distances ($D_M$) and the threshold values, were compared for each scheme (see Table 2).

Table 2: The Comparison of the Three Schemes for Establishing Identifying Model ll

|  |  | Scheme 1 | Scheme 2 | Scheme 3 |
|---|---|---|---|---|
| Roxithromycin | Threshold Value | 0.17586 | 0.25582 | 0.26504 |
|  | Standard Deviation | 0.046240 | 0.087353 | 0.098897 |
|  | Average Distance | 0.030166 | 0.067815 | 0.081845 |
| Roxithromycin Standard Sample | Threshold Value | 3.0326E-005 |  | 0.0020698 |
|  | Standard Deviation | 0.000025 |  | 0.001497 |
|  | Average Distance | 0.000018 |  | 0.001123 |
| Starch without Active Component | Threshold Value |  | 0.35437 | 0.59625 |
|  | Standard Deviation |  | 0.133674 | 0.157699 |
|  | Average Distance |  | 0.104695 | 0.84123 |
| Accuracy Rate |  | 486/489 | 516/516 | 516/519 |

The distance from the NIR spectrum of each type, i.e. the average NIR spectrum of said type, to the average NIR spectrum of Roxithromycin tablet was calculated in each preliminary model of identifying model II (see table 3). It was found that: Aminophylline may still be mistakenly determined to be Roxithromycin in Scheme 2, while other risk of potential confusion being present; Scheme 1 had an identificative ability equal to that of Scheme 3, and thus either of them can be selected according to practical conditions. In Scheme 3, however, various indefinite factors may be brought about by the replacement of the NIR spectra of the adjuvant with that of starch without any active component; while in Scheme 1 the NIR spectrum of only the control sample of the active compound was used. Therefore, Scheme 1 was selected to be the preliminary model of identifying model II, and was adjusted by methods in the prior art. The obtained model was used as identifying model II.

Table 3: The Distances from the Average NIR Spectrum of Roxithromycin Tablet to the Average NIR Spectra of Other Types in Different Preliminary Models of Identifying Model II

|  |  | The Distances from the Average NIR Spectrum of Roxithromycin Tablet to the Average NIR Spectrum of Other Types | | |
|---|---|---|---|---|
|  |  | Scheme One | Scheme Two | Scheme Three |
| 1 | Indomethacin | 0.251602 | 0.567529 | 0.493289 |
| 2 | Pyrazinamide | 0.914418 | 0.997205 | 0.899964 |

(continued)

| | | The Distances from the Average NIR Spectrum of Roxithromycin Tablet to the Average NIR Spectrum of Other Types | | |
|---|---|---|---|---|
| | | Scheme One | Scheme Two | Scheme Three |
| 3 | Metformin Hydrochloride | 0.573758 | 0.309733 | 0.572927 |
| 4 | Nitroglycerin | 0.354878 | 0.509475 | 0.485006 |
| 5 | Nifedipine | 0.237521 | 0.441985 | 0.417535 |
| 6 | Cimetidine | 0.378441 | 0.277656 | 0.362458 |
| 7 | Vitamin C | 0.634509 | 0.597305 | 0.613745 |
| 8 | Nimodipine | 0.206689 | 0.393980 | 0.392211 |
| 9 | Ribavirin | 0.431136 | 0.582977 | 0.515047 |
| 10 | Metronidazole | 0.381145 | 0.552665 | 0.443714 |
| 11 | Paracetamol | 0.640036 | 0.410864 | 0.772173 |
| 12 | Diazepam | 0.307595 | 0.617652 | 0.570304 |
| 13 | Dexamsethasone Acetate | 0.314392 | 0.616736 | 0.567490 |
| 14 | Prednisone Acetate | 0.298040 | 0.616217 | 0.572637 |
| 15 | Ibuprofen | 0.293276 | 0.493383 | 0.390581 |
| 16 | Aminophylline | 0.386149 | 0.161330 | 0.408338 |
| 17 | Estazolam | 0.347265 | 0.664897 | 0.612317 |
| 18 | Aspirin | 0.378341 | 0.389056 | 0.378259 |
| 19 | Vitamin B6 | 0.291881 | 0.698203 | 0.510254 |
| 20 | Vitamin B4 | 0.311168 | 0.685612 | 0.622760 |
| 21 | Vitamin B2 | 0.320253 | 0.680378 | 0.621717 |
| 22 | Vitamin B1 | 0.293586 | 0.650621 | 0.603329 |
| 23 | Starch 1 without Active Component | 0.402140 | 1.405545 | 1.133845 |
| 24 | Starch 2 without Active Component | 0.628826 | 1.094856 | 0.823331 |

4.Detecting the sample to be identified

Identifying models I and II in Example 1 were used to detect 10 types of drugs (tablets with aluminum plastic packaging) containing different active compounds which are different frommodeling samples. If identifying model I had the same identification result with identifying model II, the compound shown in this result was determined to be the active compound of the sample to be identified. The identification and detection results were shown in Table 4 as follows:

Table 4: The Identification Results of the Identifying Model in Example 1 for 10 Types of Drugs

| Type | The Accuracy Rate for the Combination of Identifying Models I and II* |
|---|---|
| Azithromycin | 99.56 % |
| Roxithromycin | 97.55 % |
| Erythromycin | 99.96 % |

(continued)

| Type | The Accuracy Rate for the Combination of Identifying Models I and II* |
|---|---|
| Kitasamycin | 99.60 % |
| Erythromycin Ethylsuccinate | 99.78 % |
| Acetylspiramycin | 100 % |
| Acetylkitsamycin | 100 % |
| Meleumycin | 100 % |
| Midecamycin | 100 % |
| Clarithromycin | 100 % |

* The accuracy rate was obtained by the methods of China National Standard, and the samples were examined by the methods of China National standard as well.

## Claims

1. A method for identifying drugs by NIR spectroanalysis, comprising the following steps:

    a. collecting modeling samples;
    b. establishing and adjusting identifying model I based on said modeling samples;
    c. establishing and adjusting identifying model II based on said modeling samples;
    d. identifying a sample to be identified by applying identifying models I and II respectively; and
    e. comparing the identification results of said two identifying models to determine said sample to be identified.

2. The method according to claim 1, **characterized in that**, the said identification was carried out in the manner as follows:

    If the identification results of said two models are identical with each other, and are in agreement with the labeled name of said sample to be identified, it is determined that said sample to be identified is the drug as labeled;
    If the identification results of said two models are different from each other, it is determined that said sample to be identified is not the drug as labeled.

3. The method according to claim 1, **characterized in that**, the modeling samples are commercially available drugs in accordance with Chinese Pharmacopoeia, which comprise at least a drug containing an active compound having the same chemical structure as that of the active compound labeled as being contained in the sample to be identified; and a drug containing an active compound having a chemical structure different from that of the active compound labeled as being contained in the sample to be identified.

4. The method according to claims 1, **characterized in that**, when said identifying models I is established, the modeling samples comprise three or more types of drugs.

5. The method according to claim 4, **characterized in that**, When said identifying models I is established, the modeling samples comprise five ormore types of drugs, and each type comprises products collected from three or more manufacturers.

6. The method according to claims 1, **characterized in that**, the modeling samples and the sample to be identified have the same dosage form of drugs and the same external packaging of drugs.

7. The method according to claim 1, **characterized in that**, when said identifying models II is established, the modeling samples comprise the drug type corresponding to the label of the sample to be identified and its adjuvant.

8. The method according to claim 1, **characterized in that**, said identifying model I is capable of differentiating and identifying various types of modeling samples.

9. The method according to claim 8, **characterized in that**, said identifying model I achieves differentiation and identification of various types of modeling samples through multi-level identification.

10. The method according to claim 1, **characterized in that**, said identifying model I can achieve an accuracy of 100% in differentiating and identifying the types of modeling samples, and an accuracy of no less than 90% in differentiating and identifying a sample to be identified.

11. The method according to claim 10, **characterized in that**, said identifying model I can achieve an accuracy of no less than 95% in differentiating and identifying a sample to be identified.

12. The method according to claim 1, **characterized in that**, identifying model I is established and adjusted by the methods for establishing and adjusting qualitative NIR models in the prior NIR spectroanalysis.

13. The method according to claim 11, **characterized in that**, identifying model I is established through the following steps: Firstly, reducing the dimensionality of the NIR-spectra data of the modeling samples by PCA method; and then, establishing identifying model I by data-processing modes of NIRspectroanalysis software with calculating principle being Pattern Recognition method.

14. The method according to claim 13, **characterized in that**, the Pattern Recognition method is PCA Discriminant Analysis method.

15. The method according to claim 14, **characterized in that**, said identifying model I , based on the distance between the NIR spectrum of the sample to be identified and the average NIR spectra of the modeling samples, performs Cluster Analysis, and accordingly, determine the threshold values of the modeling samples.

16. The method according to claim 15, **characterized in that**, Euclidian Distance is used as a classification basis to make Cluster Analysis.

17. The method according to claim 1, **characterized in that**, identifying model II is established through the following steps:

   a. collecting NIR-spectra data:

   measuring and collecting the NIR-spectra information of each modeling sample individually by NIR spectrometers;

   b. establishing and adjusting identifying model II:

   establishing several preliminary models of the NIR spectroanalysis for each type of the modeling samples by various data-processing modes of prior qualitative NIR spectral analysis software;
   choosing one of these preliminary models which has the strongest ability to identify each type of modeling samples as the preliminary model of identifying model II for the corresponding modeling sample; and
   establishing and adjusting the preliminary model of identifying model II by the methods for establishing and adjusting qualitative NIR identifying models in the prior NIR spectroanalysis, so as to obtain said identifying model II for each type of modeling samples.

18. The method according to claim 17, **characterized in that**, the strongest ability to identify each type of the modeling sample refers to, for every two types of the modeling samples, the maximized quotient of the difference between the distance between the average NIR spectra thereof and the sum of the threshold values thereof to the sum of the standard deviations, i.e. SDevs, of the distances from the NIR spectra to the average NIR spectra thereof.

19. The method according to claim 18, **characterized in that**, the distance between the average NIR spectra thereof refers to Euclidian Distance between the average NIR spectra thereof.

20. The method according to claim 19, **characterized in that**, the average NIR-spectra distance, i.e. $D_M$ of identifying model II is calculated as follows:

EP 1 754 967 A2

$$D_M = \frac{\sum Di}{n}$$

wherein

n is the number of NIR spectra of the modeling samples,
i represents the No. i NIR spectrum of the drug type, and i is 1, 2, 3, ... n, and
D represents Euclidian Distance;

the Euclidian Distance ($D_{AB}$) between NIR spectra of modeling samples of different types is calculated as follows:

$$D_{AB} = \sqrt{\sum_k (a_k - b_k)^2}$$

wherein

the vector $a_k$ represents the ordinate of the average NIR spectrum of drug type A,
the vector $b_k$ represents the ordinate of NIR spectrum of drug type B,
k represents the No. k data point,

and the sum calculation is carried out for all chosen data points;
SDev represents the standard deviation of the distance from the NIR spectrum of a type of modeling sample to the average NIR spectrum, which is calculated as follows:

$$SDev = \sqrt{\frac{\sum_i Di^2}{n-1}}$$

wherein

i represents the No. i NIR spectrum of the modeling samples,
n represents the number of the original NIR spectra of the modeling samples;
i is 1, 2, 3, ... n,
Di represents Euclidian Distance from the No.i NIR spectrum of the modeling sample to the average NIR spectrum.

21. The method according to claim 17, **characterized in that**, for one modeling sample, identifying model II is established on an NIR spectral band different from, such as, wider than that used in establishing identifying model I.

22. The method according to claim 1, **characterized in that**, the identifying models I and II can be used in any order without limitation.

23. The method according to claim 1, **characterized in that**, the threshold values of identifying models I are adjusted according to step a - e, and the threshold values of identifying models II are adjusted according to step a as follows:

Step a:

for the types of the modeling samples which can be differentiated and identified from each other without confusion, the threshold values thereof are adjusted as follows:

```
DT_A = Mean hitA + 3SD (99 % of the confidence limit);
```

wherein

A represents any type of the modeling samples which can be differentiated and identified from each other,
$DT_A$ is the threshold value of type A,
Mean hit A is the average value of the distances from the NIR spectra of each sample of type A to the average NIR spectrum of that type:

SD represents the standard deviation of the difference between the distance from the NIR spectrum of any one modeling sample to the average NIR spectrum and the average value of the distances from all the NIR spectra of the modeling samples of said type to the average NIR spectrum, which is calculated as follows:

$$SD = \sqrt{\frac{\sum_i (Xi - Xm)^2}{n - 1}}$$

wherein

i represents the No. i original NIR spectrum,
n represents the number of the original NI spectra;
i is 1, 2, 3, ... n, Xi represents Euclidian Distance from the No. i original NIR spectrum to the average NIR spectrum, and
Xm represents the average value of Euclidian Distances from all the NIR spectra of the samples of said type to the average NIR spectrum;

Step b:

for the type of the modeling samples which can be differentiated and identified from each other, if a confusion with other types may be caused by the above method, the threshold value of type A is adjusted as follows, while the threshold values of other types remain unchanged:

```
DT_A = Mean hitA + 2SD (95 % of the confidence limit);
```

wherein, the symbols are defined as that in step a;

Step c:

for the type of the modeling samples which can be differentiated and identified from each other, if a confusion with other types may be caused by the method described in Step b, the threshold value of the type, e.g. type A is adjusted as follows, while the threshold values of other types remain unchanged:

```
DT_A = Mean hitA + 1.65SD (90 % of the confidence limit);
```

wherein, the symbols are defined as that in step a;

Step d:

if a confusion with other types may still be caused by the method described in Step c, the threshold value of type A is no longer adjusted, and is put into the next level of the identifying model for continuing identification;

Step e:

if the number of the modeling samples of a certain type is too small to be sufficiently representative for establishing the model, the threshold value thereof is set to be the same as that of another type having similar structure.

24. The method according to claim 1, **characterized in that**, the sample to be identified has the dosage forms of tablets, capsules, injectable powders, injections, ointments, suspensions, sugar-coated tablets, or compound formulations with constant compositions.

25. The method according to claim 24, **characterized in that**, the sample to be identified has the dosage form of tablets, injectable powders or capsules.

26. The method according to claim 1, **characterized in that**, the packaging form of the tablet is aluminum-plastic.

27. The method according to claim 24, **characterized in that**, the sugar coating is removed before the NIR spectrum data of the sugar-coating tablet are collected.

28. An instrument for identifying drugs, **characterized in that**, the instrument is equipped with the identifying models I and II in claim 1.

29. The instrument according to claim 28, **characterized in that**, the instrument is NIR spectrometer.

30. A vehicle for identifying drugs, **characterized in that**, the vehicle is equipped with the instrument of claim 28.

31. The vehicle according to claim 30, **characterized in that**, said instrument is NIR spectrometer.

First identification

```
                           ┌──────────────┐
                           │  Macrolide   │      N      Identification
                           │ antibiotic   ├────────►    finished
                           │   drug?      │
                           └──────┬───────┘
                                  │ Y
                    ┌─────────────┴──────────────┐
                    ▼                            ▼
Identification   ┌──────────────────┐   ┌──────────────────────┐
finished   ◄─────┤  Identification  │   │ Identification failed│
                 │    succeeded     │   │                      │
                 └──────────────────┘   └──────────┬───────────┘
─ ─ ─ ─ ─ ─ ─ ─ ─ ─ ─ ─ ─ ─ ─ ─ ─ ─ ─ ─ ─ ─ ─ ─ ─ ─│─ ─ ─ ─ ─ ─ ─ ─
                               ┌────────────────────┴─────────────────┐
                               ▼                                      ▼
Second identification  ┌──────────────────┐          ┌──────────────────────┐
                       │ Fourteen-membered│          │ Sixteen-membered     │
                       │ macrolide        │          │ macrolide antibiotic │
                       │ antibiotic drug  │          │ drug                 │
                       └────────┬─────────┘          └──────────┬───────────┘
                                ▼                               ▼
                       ┌──────────────────┐          ┌──────────────────────┐
                       │ Identification   │          │ Identification        │
                       │ succeeded        │          │ succeeded             │
                       └────────┬─────────┘          └──────────┬───────────┘
                                └──────────┐     ┌──────────────┘
                                           ▼     ▼
                                        Identification
                                          finished
```

# Figure    1